(19) Europäisches Patentamt
European Patent Office
Office européen des brevets

(11)   **EP 3 479 050 B1**

(12)   **FASCICULE DE BREVET EUROPEEN**

(45) Date de publication et mention
de la délivrance du brevet:
**03.06.2020   Bulletin 2020/23**

(21) Numéro de dépôt: **17732474.6**

(22) Date de dépôt: **28.06.2017**

(51) Int Cl.:
***F42B 3/04*** *(2006.01)*

(86) Numéro de dépôt international:
**PCT/EP2017/066046**

(87) Numéro de publication internationale:
**WO 2018/002166 (04.01.2018 Gazette 2018/01)**

(54) **GENERATEUR DE GAZ**

GASGENERATOR

GAS GENERATOR

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:   **29.06.2016   FR 1656107**

(43) Date de publication de la demande:
**08.05.2019   Bulletin 2019/19**

(73) Titulaire: **Autoliv Development AB
447 83 Vårgårda (SE)**

(72) Inventeur: **PRIMA, Gerald
29510 Landrévarzec (FR)**

(74) Mandataire: **Poindron, Cyrille et al
Novagraaf International SA
Chemin de l'Echo 3
1213 Onex (CH)**

(56) Documents cités:
**EP-A1- 0 407 248       EP-A2- 2 195 206
WO-A2-2015/144634**

**Description**

La présente invention concerne de manière générale un générateur de gaz destiné à fournir des gaz de gonflage pour un dispositif de sécurité passive automobile, tel qu'un coussin de sécurité autrement appelé airbag. En particulier, l'invention concerne un générateur de gaz pyrotechnique dans lequel les gaz de gonflage sont générés par la combustion de propergol, et qui présente un boîtier de forme discoïde pour recevoir le propergol ou la matière pyrotechnique sous forme de pastilles en vrac.

Il est connu dans l'art antérieur des générateurs de gaz de forme discoïde selon le préambule de la revendication 1, tel que celui divulgué dans le document EP2195206 A2 ou publication équivalente WO 2009/043904 A2. En contrepartie, le générateur de gaz de ce document présente notamment une structure interne avec une plaque épaisse formant une paroi d'une chambre de combustion et devant résister à une pression élevée en cours de fonctionnement, ce qui augmente les coûts et le poids embarqué en véhicule. En effet, la plaque épaisse de ce document porte les tuyères (la plus petite section de passage des gaz du générateur qui permet de définir la pression de combustion de la matière pyrotechnique, la plus haute pression régnant dans le générateur) et doit donc résister à cette pression de combustion. En considérant aussi le diffuseur en tôle épaisse serti sur le générateur de gaz de ce document, on note que le poids et le coût sont importants.

Un but de la présente invention est de répondre aux inconvénients des documents de l'art antérieur mentionnés ci-dessus et en particulier, tout d'abord, de proposer un générateur de gaz pyrotechnique qui présente une structure interne simple et sans pièces massives, tout en présentant un mode de fonctionnement fiable, et un procédé de fabrication rapide et sans opération complexe.

L'invention est un générateur de gaz selon la revendication 1 et un procédé d'assemblage dudit générateur de gaz selon la revendication 15. Pour cela un premier aspect de la divulgation concerne un générateur de gaz pyrotechnique de forme discoïde, comprenant :

- un boîtier avec des trous de diffusion,
- de la matière pyrotechnique agencée dans le boîtier,
- des moyens de filtration agencés dans le boîtier,
- des moyens de confinement, agencés dans le boîtier entre la matière pyrotechnique et les moyens de filtration,
- des moyens de drainage agencés dans le boîtier entre la matière pyrotechnique et les moyens de confinement,

caractérisé en ce que les moyens de filtration sont agencés pour procurer un appui à une portion soutenue des moyens de confinement au moins en début de fonctionnement du générateur de gaz. Le générateur selon la présente mise en œuvre est agencé de telle sorte que les moyens de confinement prennent appui directement sur les moyens de filtration, de sorte à ce qu'aucun autre appui ne soit nécessaire, si bien que la structure interne du générateur de gaz est simplifiée et allégée. En effet, les moyens de confinement n'ont pour seules fonctions que d'assurer l'étanchéité de la matière pyrotechnique et son déconfinement à une pression prédéterminée lors de la mise à feu du générateur. Ainsi, l'épaisseur des moyens de confinement peut être réduire sans dégrader leur pression d'ouverture puisqu'ils sont supportés par les moyens de filtration. En d'autres termes, les moyens de filtrations assurent une déformation et une ouverture maîtrisées des moyens de confinement en empêchant ces derniers de s'effondrer, du fait de l'appui procuré par les moyens de filtration. Enfin, l'appui est procuré au moins au début du fonctionnement, c'est-à-dire entre un instant où la pression interne au sein de la matière pyrotechnique commence à augmenter suite à l'allumage, et un instant où les moyens de confinement désoperculent ou s'ouvrent.

En d'autres termes :

les moyens de confinement peuvent atteindre une pression de désoperculage/claquage prédéterminée qui ne pourrait pas être atteinte sans cet appui,
les moyens de confinement peuvent atteindre une pression de désoperculage/claquage prédéterminée supérieure à la pression de désoperculage/claquage qui peut être atteinte sans cet appui (les moyens de filtration "réduisent" la surface d'application de la pression),
les moyens de confinement sont définis de sorte qu'ils ne peuvent atteindre une pression de claquage prédéterminée qu'en présence des moyens de filtration.

Avantageusement, les moyens de confinement comprennent au moins un opercule qui assure l'étanchéité de la chambre contenant la matière pyrotechnique avant la mise à feu du générateur de gaz, et qui se rompt à une pression suffisamment élevée pour garantir un allumage initial suffisant de la matière pyrotechnique pour avoir une combustion complète et conforme au cours du temps de fonctionnement.

Avantageusement, la matière pyrotechnique est un chargement en vrac de pastilles.

Avantageusement, la matière pyrotechnique est un chargement en vrac de pastilles autour d'un dispositif d'allumage du générateur de gaz. Cela permet d'améliorer l'allumage de la matière pyrotechnique et améliore la compacité, notamment axiale, du générateur de gaz. Cette compacité axiale est particulièrement recherchée pour les airbags frontaux, conducteurs et passagers.

Avantageusement, l'appui procuré par les moyens de filtration aux moyens de confinement permet une rupture d'une portion non soutenue des moyens de confinement en début de fonctionnement du générateur de gaz, et cette rupture est maîtrisée et répétable, car la dimension de la partie non soutenue est imposée par la dimension des moyens de filtration qui forment un appui.

Avantageusement, les moyens de filtration apportent un appui en forme de couronne aux moyens de confinement, de sorte à définir une portion non soutenue des moyens de confinement en forme de disque. Une telle portion non soutenue en forme de disque présente une pression et un mode de rupture répétables.

Avantageusement, la portion non soutenue des moyens de confinement est en regard d'un espace laissé vide par les moyens de filtration.

Avantageusement, la portion non soutenue est agencée pour se rompre en formant des pétales dans l'espace laissé libre par les moyens de filtration. En rompant, les moyens de confinement forment des pétales qui restent attachés à la portion soutenue des moyens de confinement. Ainsi aucun débris libre n'est créé, ce qui garantit l'absence de composants éjectés vers le dispositif de sécurité.

Avantageusement, les moyens de filtration sont un filtre en forme de cylindre creux.

Avantageusement, les moyens de confinement sont liés au boitier de manière étanche.

Avantageusement, les moyens de confinement présentent une épaisseur comprise dans une plage de valeurs allant de 0.4 à 1 mm et préférentiellement dans une plage de valeurs allant de 0.4 à 0.9mm, avec par exemple au moins une portion marquée notamment cruciforme d'une épaisseur restante à $0.3 \pm 0.05$mm. On peut prévoir les caractéristiques mécaniques suivantes : résistance à la rupture (Rm) comprise dans une plage de valeurs allant 300MPa à 800MPa, et/ou un allongement avant rupture (A%) supérieur ou égal à 16%, et/ou une résistance élastique (Re) supérieure ou égale à 420MPa. On peut prévoir par exemple un alliage du type S420MC (1.0980) (norme EN 10149-2-1996). En conséquence, la rupture de tels moyens de confinement s'effectue entre 1ms et 6ms après la mise à feu du dispositif d'allumage. Il est à noter que de tels moyens de confinement ne peuvent pas s'ouvrir de manière répétable si les moyens de filtration ne définissent pas un appui sur lequel les moyens de confinement s'articulent pour s'ouvrir.

Avantageusement, les moyens de confinement présentent une épaisseur inférieure à 60% d'une épaisseur du boîtier, et en particulier les moyens de confinement présentent une épaisseur inférieure à 60% d'une épaisseur de la pièce définissant les tuyères.

Avantageusement, les moyens de confinement présentent une dimension externe supérieure ou égale à une dimension externe des moyens de filtration. Il est à noter que des moyens de confinement aussi grands ne peuvent pas s'ouvrir de manière répétable si les moyens de filtration ne définissent pas un appui sur lequel les moyens de confinement s'articulent pour s'ouvrir.

Avantageusement, au moins une face des moyens de filtration est en appui sur une paroi du boîtier.

Avantageusement, la face des moyens de filtration en appui sur le boîtier est opposée à une face des moyens de filtration procurant un appui aux moyens de confinement. Les moyens de filtration ont donc une fonction de pont mécanique entre les moyens de confinement et le boîtier. En d'autres termes, les moyens de filtration prennent directement appui sur le boîtier, ce qui évite de devoir leur donner une rigidité accrue pour reprendre les efforts d'appui des moyens de confinement.

Avantageusement, les moyens de confinement comprennent des moyens de positionnement tels qu'une nervure, permettant de définir un espace libre ménagé entre une face aval (ou en regard des trous de diffusion) des moyens de filtration et une paroi du boitier traversée par les trous de diffusion. Le filtre est donc positionné par une nervure pour garantir qu'il y a toujours un espace libre entre le filtre et la paroi du diffuseur, pour favoriser une bonne circulation des gaz de diffusion.

Avantageusement, les trous de diffusion forment des tuyères de pilotage de la combustion de la matière pyrotechnique. Le générateur selon la présente mise en œuvre ne comporte pas de tuyère interne de pilotage. La combustion de la matière pyrotechnique est pilotée par les trous de diffusion, ce qui signifie que toute l'enceinte interne est pressurisée de manière homogène : il n'y a pas besoin de pièce interne massive pour résister à une pression. Cela permet de garantir un allumage satisfaisant de la matière pyrotechnique tout en conservant les moyens de filtration à l'intérieur de la chambre de combustion, dans des zones de basses vitesses des gaz ce qui optimise la captation de particules produites par la combustion.

Avantageusement, chaque trou de diffusion présente une surface de diffusion inférieure à 2.3 mm$^2$. De plus, l'étanchéité du générateur de gaz n'est pas réalisée avec un opercule sur les trous de diffusion, et cela permet de réduire la taille de ces derniers (sans incidence sur la pression de désoperculage donc) pour réduire l'agressivité des jets de gaz de diffusion sur le sac ou coussin gonflable.

Avantageusement, un espace est ménagé entre les moyens de filtration et les trous de diffusion. Un tel espace permet de laisser libre les trous de diffusion, ce qui évite toute perturbation des flux de diffusion. Le générateur de gaz se conforme alors facilement au test qui consiste à mettre à feu le générateur de gaz seul sur une surface plane avec un déplacement devant rester inférieur à 5m par exemple. De plus, le gonflage du dispositif de sécurité est conforme au cahier des charges, puisque les trous de diffusions ne sont pas obstrués et délivrent tous la même quantité de gaz.

Avantageusement, l'espace est ménagé entre une face aval des moyens de filtration et une paroi du boîtier traversée par les trous de diffusion et présente une épaisseur au niveau des trous de diffusion d'au moins 1mm.

Avantageusement, le boîtier comprend :

- une base recevant la matière pyrotechnique et
- un diffuseur comprenant les trous de diffusion, soudé sur la base,

et les moyens de confinement sont soudés sur le boîtier. Une telle méthode d'assemblage permet d'obtenir une très bonne étanchéité.

Avantageusement, la base est soudée par inertie sur le diffuseur, et les moyens de confinement comprennent des moyens d'indexage en rotation par rapport à l'un de la base et du diffuseur, de telle sorte à être soudés par inertie à l'autre de la base et du diffuseur simultanément à la soudure par inertie de la base sur le chapeau. Selon cette mise en œuvre, les moyens de confinement sont indexés à l'une des deux autres pièces (l'un de la base et du diffuseur), pour être entrainée par cette dernière lors de la soudure friction, ce qui permet de la souder par friction sur l'autre pièce en même temps. L'interface d'indexage est prévue pour fournir un indexage amovible ou réversible entre les moyens de confinement et l'un de la base et du diffuseur, préalablement à l'opération de soudure par friction. En d'autres termes, il suffit d'indexer (par emboîtement libre ou en force, insertion libre ou en force, encliquetage par exemple) les moyens de confinement sur ou dans l'un de la base et du diffuseur, pour obtenir un sous ensemble intermédiaire lors de la fabrication, juste avant la soudure par friction sur l'autre de l'un de la base et du diffuseur. En conséquence, on comprend qu'il est possible lors de l'opération de soudage de ne prévoir un outillage de préhension que pour la base et le diffuseur, car les moyens de confinement sont indexés par l'un de la base et du diffuseur. La fabrication est donc simplifiée, plus rapide et requiert moins d'investissements.

Avantageusement, les moyens de confinement comprennent un disque métallique et un joint torique agencé pour former une étanchéité entre le disque métallique et le boîtier. Une telle mise en oeuvre est bon marché.

Avantageusement, le générateur de gaz comprend un dispositif d'allumage, et de la matière pyrotechnique est agencée en regard d'une surface latérale du dispositif d'allumage. Cela rend le générateur de gaz plus compact et améliore l'allumage de la matière pyrotechnique par le dispositif d'allumage.

Avantageusement, le générateur de gaz comprend un dispositif d'allumage, et de la matière pyrotechnique est agencée en regard d'une surface latérale du dispositif d'allumage, et en regard d'une extrémité du dispositif d'allumage.

Avantageusement, de la matière pyrotechnique est au contact du dispositif d'allumage. Il n'y a donc aucune barrière ou pièce à prévoir entre la matière pyrotechnique (des pastilles de propergol en vrac) et le dispositif d'allumage, ce qui facilite la fabrication.

Avantageusement, la matière pyrotechnique est séparée de l'élément de confinement. Les moyens de drainage sont intercalés entre la matière pyrotechnique et les moyens de confinement.

Avantageusement, les moyens de filtration présentent un évidement central, et le boîtier et/ou les moyens de confinement présente(nt) une protubérance de centrage engagée avec l'évidement central.

Alternativement, les moyens de filtration présentent un encombrement extérieur tel qu'un diamètre extérieur, et le boîtier et/ou les moyens de confinement présente(nt) un logement de centrage dans lequel s'engagent les moyens de filtration. Cela permet de garantir l'espace libre entre les moyens de filtration et les trous de diffusion en évitant tout déplacement des moyens de filtration lors de l'assemblage du générateur de gaz et limite les déformations des moyens de filtration lors du fonctionnement, déformations qui pourraient influer sur les pressions à l'intérieur du générateur de gaz.

Avantageusement, la matière pyrotechnique est du propergol, les moyens de filtration sont un filtre, les moyens de confinement sont un opercule, les moyens de drainage sont un composant évidé ou poreux fortement perméable à l'air.

Autrement dit, l'invention concerne un générateur de gaz pyrotechnique de forme discoïde, comprenant :

- un boîtier avec des trous de diffusion,
- de la matière pyrotechnique agencée dans le boîtier,
- un filtre agencé dans le boîtier,
- un opercule, agencé dans le boîtier entre la matière pyrotechnique et le filtre,
- un composant évidé ou poreux agencé dans le boîtier entre la matière pyrotechnique et l'opercule,

caractérisé en ce que le filtre est agencé pour procurer un appui à une portion soutenue de l'opercule en début de fonctionnement du générateur de gaz.

En d'autres termes, l'invention concerne un générateur de gaz pyrotechnique de forme discoïde, comprenant :

- un boîtier avec des trous de diffusion,
- de la matière pyrotechnique agencée dans le boîtier,
- des moyens de filtration agencés dans le boîtier,
- des moyens de confinement, agencés dans le boîtier entre la matière pyrotechnique et les moyens de filtration,
- des moyens de drainage agencés dans le boîtier entre la matière pyrotechnique et les moyens de confinement,

caractérisé en ce que les moyens de filtration sont agencés pour procurer un appui à une portion soutenue des moyens de confinement en début de fonctionnement du générateur de gaz, et dans lequel une pression de combustion notée $P_{comb}$ mesurée en amont des moyens de drainage et une pression de diffusion notée $P_{diff}$ mesurée en aval des moyens de drainage respectent le ratio suivant :

$$P_{comb}/P_{diff} < 1.5.$$

En particulier, la pression de combustion $P_{comb}$ est mesurée au sein d'un chargement en vrac de matière pyrotechnique, et la pression de diffusion $P_{diff}$ est mesurée au niveau d'un diamètre interne des moyens de filtration.

Avantageusement, la matière pyrotechnique est un chargement en vrac de matière pyrotechnique est contenue dans une base de diamètre interne Dp, et un ratio entre une hauteur Hp du chargement de matière pyrotechnique et le diamètre Dp vérifie :

Hp/Dp < 0.75.

Cette mise en œuvre permet de garantir une bonne évacuation des gaz de combustion, et une combustion homogène au sein du chargement de matière pyrotechnique.

Avantageusement, les moyens de filtration sont un filtre avec un diamètre interne D1 et une hauteur Hf, et un ratio entre le diamètre interne D1 et un diamètre Dp du chargement de matière pyrotechnique vérifie : D1/Dp > 0.3 et/ou Hf/Hp > 0.25.

Cette mise en œuvre permet de garantir une bonne circulation des gaz de combustion dans les moyens de filtration, sans provoquer de serrage dans ces derniers.

Un deuxième aspect de l'invention concerne un procédé d'assemblage d'un générateur de gaz selon le premier aspect de l'invention, comprenant un dispositif d'allumage et dont le boitier est formé d'une base et d'un diffuseur recevant les trous de diffusion, le procédé d'assemblage comprenant les étapes consistant à :

- fixer le dispositif d'allumage à la base,
- charger par exemple par gravité la matière pyrotechnique dans la base au contact du dispositif d'allumage, au travers d'une ouverture de chargement de la base,
- positionner les moyens de drainage entre la matière pyrotechnique et l'ouverture de chargement de la base,
- positionner les moyens de confinement au dessus des moyens de drainage et au niveau de l'ouverture de chargement,
- positionner les moyens de filtration sur les moyens de confinement
- souder le diffuseur à la chambre de sorte à ce que les moyens de filtration soient intercalés entre les moyens de confinement et une paroi du diffuseur et de sorte à obturer l'ouverture de chargement avec les moyens de confinement.

D'autres caractéristiques et avantages de la présente invention apparaîtront plus clairement à la lecture de la description détaillée qui suit de deux modes de réalisation de l'invention donnés à titre d'exemples nullement limitatifs et illustrés par les dessins annexés, dans lesquels :

- la figure 1 représente une coupe d'une première mise en œuvre d'un générateur de gaz selon la présente invention, avant fonctionnement ;

- la figure 2 représente une coupe d'une deuxième mise en œuvre d'une générateur de gaz selon la présente invention, avant fonctionnement ;

- la figure 3 représente le générateur de gaz de la figure 1 après fonctionnement.

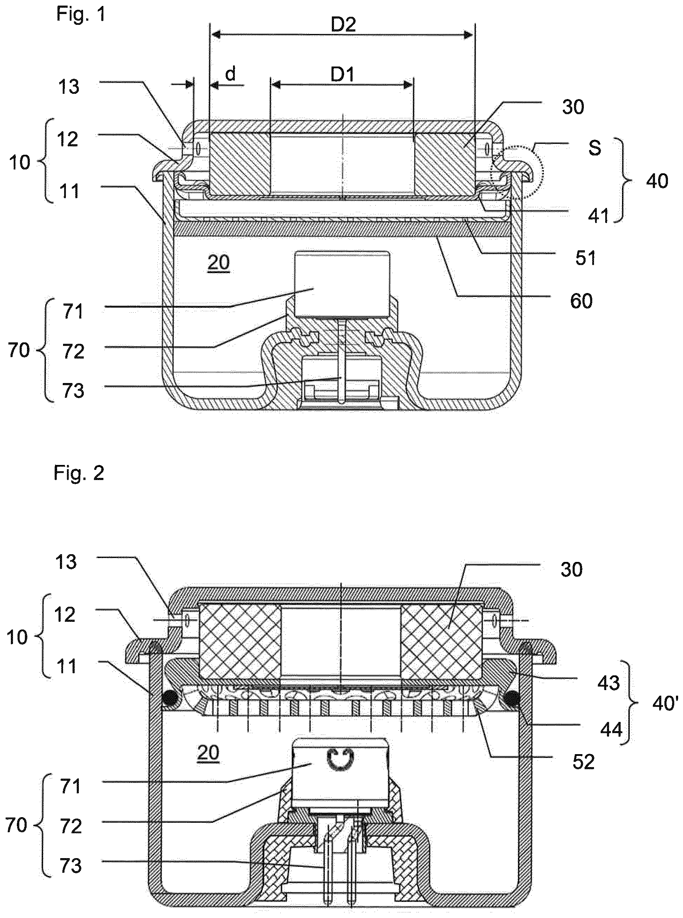

La figure 1 représente un générateur de gaz comprenant un boîtier 10 formé par une base 11 soudée par inertie à un diffuseur 12, qui comprend une pluralité de trous de diffusion 13.

A l'intérieur du boîtier 10, de la matière pyrotechnique 20 est placée autour d'un dispositif d'allumage 70 constitué d'un étui 71 renfermant de la matière pyrotechnique d'allumage, d'un surmoulage 72, et de broches de connexion 73 pour recevoir un signal électrique de mise à feu. Autrement dit, le dispositif d'allumage 70 est ici un allumeur électro-pyrotechnique.

Des moyens de calage 60 (une paroi en mousse par exemple) et des moyens de drainage tels qu'une tôle perforée 51 sont placés dans la base 11 au dessus de la matière pyrotechnique 20. Les moyens de drainage peuvent également être réalisés en tricot métallique, ou en fil compacté et mis en forme de manière adéquate pour épouser le diamètre interne de la base 11. Les moyens de drainage ont pour fonction de retenir, en amont de moyens de filtration 30, la matière pyrotechnique pendant sa combustion. Cela permet de maîtriser la combustion de la matière pyrotechnique. En effet un déplacement de matière pyrotechnique au contact du filtre obstruerait partiellement le filtre ce qui limiterait les écoulements de gaz et aurait pour conséquence d'augmenter la pression dans le générateur de gaz ce qui n'est pas souhaitable dans un générateur pour applications frontales dont le diamètre est généralement supérieur à 40mm. Pour des générateurs de ce diamètre, la résistance à la pression nécessite des augmentations d'épaisseurs de paroi trop pénalisantes pour la masse totale du générateur.

La matière pyrotechnique 20 est un chargement en vrac de pastilles de propergol, mais on peut envisager un bloc monolithique de propergol.

Les moyens de filtration 30 sont agencés dans le diffuseur 12, et un opercule 41 est soudé au diffuseur 12 au même niveau que la base 11, au niveau d'une zone S de soudure par inertie. Ainsi, l'opercule 41 et la zone S de soudure par inertie forment des moyens de confinement 40 de la matière pyrotechnique 20 : celle-ci est séparée ou isolée des trous de diffusion 13 de manière étanche, puisque l'opercule 41 est un disque métallique directement soudé au diffuseur 12.

Typiquement, les moyens de filtration 30 sont un filtre en tôle perforée et enroulée sur elle-même, ou bien un fil compacté et mis en forme, ou encore un tricot métallique compacté. Comme on le voit sur la figure 1, les moyens de filtration 30 présentent une forme générale torique avec un diamètre interne D1 et un diamètre externe D2, inséré dans un lamage de l'opercule 41 pour être correctement positionnés par rapport à ce dernier et ainsi garantir le positionnement final des moyens de filtration par rapport au diffuseur 12.

Lors du fonctionnement du générateur de gaz, il est donc nécessaire de rompre l'opercule 41 pour libérer les gaz de combustion de la matière pyrotechnique 20 afin qu'ils passent dans les moyens de filtration 30 et soient diffusés par les trous de diffusion 13 avant de gonfler un coussin de sécurité, autrement appelé airbag.

A cet effet, l'opercule 41 présente une portion soutenue par les moyens de filtration, et une portion non soutenue au niveau du diamètre interne D1.

Typiquement, l'opercule 41 présente au niveau de la portion non soutenue une épaisseur comprise dans une plage de valeurs allant de 0.4 à 0.8mm avec par exemple au moins une portion marquée notamment cruciforme d'une épaisseur restante à $0.3\pm0.05$mm. On peut prévoir les caractéristiques mécaniques suivantes : résistance à la rupture (Rm) comprise dans une plage de valeurs allant 300MPa à 800MPa, et/ou un allongement avant rupture (A%) supérieur ou égal à 16%, et/ou une résistance élastique (Re) supérieure ou égale à 420MPa. On peut prévoir par exemple un acier du type S420MC (1.0980) (norme EN 10149-2-1996).

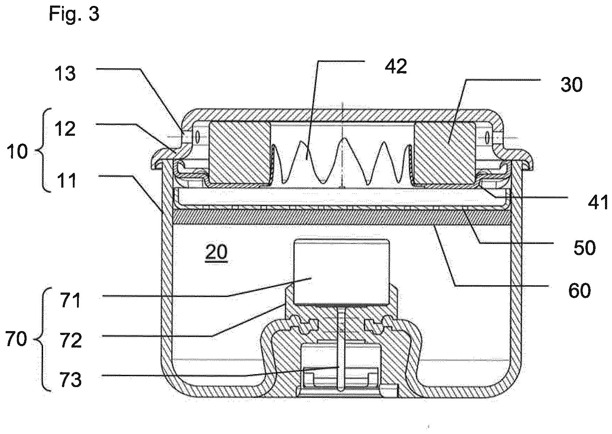

En conséquence, après une phase d'allumage de la matière pyrotechnique 20 par le dispositif d'allumage 70, la pression monte dans le compartiment du boîtier 10 contenant la matière pyrotechnique 20 et fermé par l'opercule 41, jusqu'à provoquer la rupture de ce dernier, au niveau de la portion non soutenue, comme on peut le voir sur la figure 3.

En effet, on voit figure 3 que l'opercule 41 a été rompu, en formant des pétales 42 au niveau du diamètre D1 des moyens de filtration 30. La rupture de l'opercule 41 est maîtrisée, car les moyens de filtration 30 imposent l'ouverture au niveau du diamètre D1 avec l'appui procuré à la portion soutenue de l'opercule 41 (la contrainte présente dans l'opercule 41 dépend directement de la pression, mais également de la valeur du diamètre D1). Le diamètre D1 évite aussi la propagation de la déchirure des pétales 42.

De plus, la cinématique de rupture est imposée, avec un pliage ou un enroulement des pétales 42 autour de l'arête inférieure du diamètre interne des moyens de filtration 30.

L'appui procuré par les moyens de filtration 30 impose donc la valeur de pression de désoperculage, et la cinématique de rupture, ce qui offre un allumage répétable et fiable, et une absence de débris libres. En effet, les pétales 42 restent solidaires de l'opercule 41.

Les moyens de filtration 30, pris en sandwich entre l'opercule 41 et la face interne supérieure du diffuseur 12, forment un pont mécanique pour fournir l'appui aux moyens de confinement (l'opercule 41) et évitent de recourir à une tôle épaisse. De plus, lors du fonctionnement, la pression des gaz de combustion pousse de manière continue l'opercule 41 contre les moyens de filtration 30 et contre la face interne supérieure du diffuseur 12, ce qui impose aux gaz de combustion de passer au travers des moyens de filtration 30, et non entre ces derniers et le diffuseur 12 ou l'opercule 41.

Enfin, il est à noter qu'un espace vide d est ménagé entre les moyens de filtration 30 et le diffuseur 12, en particulier au niveau des trous de diffusion 13. Cet agencement permet de garantir que les trous de diffusion 13 ne sont jamais obstrués même partiellement par les moyens de filtration 30 et diffusent tous un débit de gaz équivalent. Il n'y a pas de déséquilibre de débit, d'où une annulation des efforts de poussée et une absence de déplacement si le générateur de gaz est mis à feu seul et sans être maintenu en place.

Typiquement, le générateur de gaz selon la présente invention est utilisé dans des modules de sécurité frontaux (intégrés dans un volant de véhicule ou une planche de bord pour protéger un occupant au cours d'un choc frontal). Le chargement de matière pyrotechnique 20 peut être des pastilles de diamètre 6.35 mm, et d'épaisseur comprise entre 1.5 mm et 3 mm. La matière pyrotechnique peut présenter une vitesse de combustion d'environ 21 mm/s à 20 MPa (et en tout cas à une pression inférieure à 25MPa). Dans ces conditions, la pression de combustion Pcomb mesurée dans la base 11, n'est pas beaucoup plus élevée que la pression de diffusion Pdiff mesurée dans le diamètre interne D1 du filtre 30.

Ce résultat est obtenu grâce à la faible hauteur du chargement de pastilles par rapport au diamètre interne de la base 11 (les gaz de combustion n'ont pas à traverser un lit de pastille épais), et aussi grâce au diamètre interne D1 du filtre 30 qui autorise un flux de gaz important.

La demanderesse a mesuré et constaté que le ratio Pcomb/Pdiff est inférieur à 1.5, au moins dans les configurations suivantes :

| | Exemple 1 | Exemple 2 | Exemple 3 |
|---|---|---|---|
| Hauteur de chargement | Entre 23 mm et 28 mm | Entre 26 mm et 30 mm | Entre 37 mm et 40 mm |
| Diamètre intérieur de la base 11 | 47±1 mm | 50±1 mm | 57±1 mm |
| Diamètre intérieur du filtre 30 | 18±2 mm | 20±2 mm | 24±2 mm |
| Épaisseur du filtre 30 | 10±2 mm | 12±2 mm | 16±2 mm |
| Nombre de trous de diffusion | 20 à 24 | 20 | 30 |
| Ø des trous de diffusion | 1.7 mm | 2.2 mm à 2.4 mm | 2.9 mm |
| Surface équivalente de diffusion | 45.4 mm$^2$ à 54.5 mm$^2$ | 76 mm$^2$ à 90 mm$^2$ | 198 mm$^2$ |

Le générateur de gaz selon la présente invention présente donc une pression homogène entre la base 11 et l'intérieur du filtre 30, ce qui limite les efforts internes (car il y a peu de différences de pression).

La figure 2 représente une deuxième mise en œuvre d'un générateur de gaz selon l'invention. De la même manière que pour la première mise en œuvre, le boîtier 10 est formé par la base 11 soudée au diffuseur 12 par une soudure par inertie. Cependant, les moyens de confinement 40' comprennent ici un opercule 43 et un joint 44 montés dans la base 11, pour assurer une barrière étanche entre les trous de diffusion 13 et la matière pyrotechnique 20. L'opercule 43 peut être formé de deux pièces, comme représenté, collées ou soudées ou d'une seule pièce.

Enfin, les moyens de drainage comprennent ici une tôle perforée 52 plus épaisse que pour la première mise en œuvre.

De la même manière que pour le premier mode de réalisation, les moyens de filtration sont pris en sandwich entre le diffuseur 12 et l'opercule 43 pour fournir un appui à ce dernier. En conséquence, la partie non soutenue de l'opercule 43 peut s'ouvrir de manière répétable dans le diamètre interne des moyens de filtration 30, à une pression et à un temps répétables, sans perdre de fragments.

Le procédé de fabrication du générateur de la première ou deuxième mise en œuvre est quasiment le même : la base 11 équipée du dispositif d'allumage 70 avec son ouverture supérieure (qui sera soudée au diffuseur 12 en fin de fabrication) est placée sous un appareil de chargement de pastilles de propergol. On fait ainsi tomber par gravité les pastilles de propergol dans la base 11 par l'ouverture de la base 11 de sorte à remplir de matière pyrotechnique 20 la base 11. Les pastilles de propergol sont donc disposées en vrac autour et éventuellement au dessus du dispositif d'allumage 70.

Une fois les pastilles de propergol chargées dans la base, on peut placer successivement dans cette dernière éventuellement les moyens de calage 60, les moyens de drainage et les moyens de confinement dans cet ordre. Les moyens de filtration 30 sont alors posés sur les moyens de confinement, et le diffuseur 12 est ensuite soudé.

Dans le cas de la première mise en œuvre, l'opercule 41 est prévu avec des moyens d'engagement avec la base 11 pour en être solidaire au moins en rotation, de sorte que la soudure par inertie (ou soudure friction) soit simultanée entre la base 11, le diffuseur 12 et l'opercule 41.

On comprend que ce procédé de fabrication ne requiert pas de préparation préliminaire des pastilles de propergol en un sous ensemble (un étui contenant les pastilles par exemple) fabriqué hors ligne et déposé dans la base 11. Au contraire, les pastilles de propergol peuvent être déposées directement en vrac dans la base 11, au contact des parois latérales de cette dernière, et en contact avec le dispositif d'allumage 70. En conséquence, le procédé de fabrication est simple, le générateur de gaz ne comprend pas de contenant spécifique pour les pastilles et son volume est réduit au minimum puisqu'il n'y a pas d'espace libre laissé entre les pastilles et le dispositif d'allumage.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées. En particulier, il est fait référence à un dispositif d'allumage 70 qui est un allumeur seul, mais on peut envisager d'utiliser un relais pyrotechnique entre l'allumeur et la matière pyrotechnique 20. De plus, il est à noter que les moyens de drainage peuvent être en tricot métallique ou en fil compacté, ce qui leur procure une fonction de captage de la chaleur de combustion au cours du fonctionnement, et de maintien de cette chaleur loin des parois externe du générateur de gaz, ces dernière pouvant être en contact avec des matière plastiques qui seront alors moins exposées à la chaleur.

**Revendications**

1.   Générateur de gaz pyrotechnique de forme discoïde, comprenant :

- un boîtier (10) avec des trous de diffusion (13),
- de la matière pyrotechnique (20) agencée dans le boîtier (10),
- des moyens de filtration (30) agencés dans le boîtier (10),
- des moyens de confinement (40 ; 40'), agencés dans le boîtier (10) entre la matière pyrotechnique (20) et les moyens de filtration (30),
- des moyens de drainage agencés dans le boîtier (10) entre la matière pyrotechnique (20) et les moyens de confinement (40 ; 40'),

**caractérisé en ce que** les moyens de confinement (40 ; 40') sont un opercule et **en ce que** les moyens de filtration (30) sont agencés pour procurer un appui à une portion soutenue des moyens de confinement (40 ; 40') en début de fonctionnement du générateur de gaz.

2.   Générateur de gaz selon la revendication précédente, dans lequel la portion non soutenue des moyens de confinement (40 ; 40') est en regard d'un espace laissé vide par les moyens de filtration (30).

3.   Générateur de gaz selon la revendication précédente, dans lequel la portion non soutenue est agencée pour se rompre en formant des pétales (42) dans l'espace laissé libre par les moyens de filtration (30).

4.   Générateur de gaz selon l'une des revendications précédentes, dans lequel au moins une face des moyens de filtration (30) est en appui sur une paroi du boîtier (10).

5.   Générateur de gaz selon la revendication précédente, dans lequel la face en appui sur le boîtier (10) est opposée à une face des moyens de filtration (30) procurant un appui aux moyens de confinement (40 ; 40').

6.   Générateur de gaz selon l'une des revendications précédentes, dans lequel les trous de diffusion (13) forment des tuyères de pilotage de la combustion de la matière pyrotechnique (20).

7.   Générateur de gaz selon l'une des revendications précédentes, dans lequel un espace (d) est ménagé entre les moyens de filtration (30) et les trous de diffusion (13).

8.   Générateur de gaz selon la revendication précédente, dans lequel l'espace (d) est ménagé entre une face aval des moyens de filtration (30) et une paroi du boîtier (10) traversée par les trous de diffusion (13) et présente une épaisseur au niveau des trous de diffusion (13) d'au moins 1mm.

9.   Générateur de gaz selon l'une des revendications précédentes dans lequel les moyens de confinement (40 ; 40') sont liés au boitier de manière étanche.

10.  Générateur de gaz selon l'une des revendications précédentes, dans lequel le boîtier (10) comprend :

- une base (11) recevant la matière pyrotechnique (20) et
- un diffuseur (12) comprenant les trous de diffusion (13), soudé sur la base (11),

dans lequel les moyens de confinement (40 ; 40') sont soudés sur le boîtier (10).

**11.** Générateur de gaz selon la revendication précédente, dans lequel la base (11) est soudée par inertie sur le diffuseur (12), et dans lequel les moyens de confinement (40 ; 40') comprennent des moyens d'indexage en rotation par rapport à l'un de la base (11) et du diffuseur (12), de telle sorte à être soudés par inertie à l'autre de la base (11) et du diffuseur (12) simultanément à la soudure par inertie de la base (11) sur le diffuseur.

**12.** Générateur de gaz selon l'une des revendications 1 à 8, dans lequel les moyens de confinement (40 ; 40') comprennent un disque métallique et un joint torique agencé pour former une étanchéité entre le disque métallique et le boîtier (10).

**13.** Générateur de gaz selon l'une des revendications précédentes, comprenant un dispositif d'allumage (70), et dans lequel de la matière pyrotechnique (20) est agencée en regard d'une surface latérale du dispositif d'allumage (70), et/ou en regard d'une extrémité du dispositif d'allumage (70).

**14.** Générateur de gaz selon l'une des revendications précédentes dans lequel les moyens de filtration (30) présentent un évidement central, et dans lequel le boîtier (10) et/ou les moyens de confinement (40 ; 40') présente(nt) une protubérance de centrage engagée avec l'évidement central.

**15.** Procédé d'assemblage d'un générateur de gaz selon l'une des revendications précédentes, comprenant un dispositif d'allumage (70) et dont le boitier est formé d'une base (11) et d'un diffuseur (12) recevant les trous de diffusion (13), le procédé d'assemblage comprenant les étapes consistant à :

- fixer le dispositif d'allumage (70) à la base (11),
- charger par gravité la matière pyrotechnique (20) dans la base (11) au contact du dispositif d'allumage (70), au travers d'une ouverture de chargement de la base (11),
- positionner les moyens de drainage entre la matière pyrotechnique (20) et l'ouverture de chargement de la base (11),
- positionner les moyens de confinement (40 ; 40') au dessus des moyens de drainage et au niveau de l'ouverture de chargement,
- positionner les moyens de filtration (30) sur les moyens de confinement (40 ; 40')
- souder le diffuseur (12) à la chambre de sorte à ce que les moyens de filtration (30) soient intercalés entre les moyens de confinement (40 ; 40') et une paroi du diffuseur (12) et de sorte à obturer l'ouverture de chargement avec les moyens de confinement (40 ; 40').

**Patentansprüche**

**1.** Scheibenförmiger pyrotechnischer Gasgenerator, umfassend:

- ein Gehäuse (10) mit Diffusionslöchern (13),
- im Gehäuse (10) angeordnetes pyrotechnisches Material (20),
- im Gehäuse (10) angeordnete Filtermittel (30),
- im Gehäuse (10) zwischen dem pyrotechnischen Material (20) und den Filtermitteln (30) angeordnete Einschlussmittel (40; 40'),
- im Gehäuse (10) zwischen dem pyrotechnischen Material (20) und den Einschlussmitteln (40; 40') angeordnete Entleerungsmittel, **dadurch gekennzeichnet, dass** die Einschlussmittel (40; 40') ein Verschluss sind und dass die Filtermittel (30) ausgebildet sind, zu Beginn des Betriebs des Gasgenerators einem gestützten Teil der Einschlussmittel (40; 40') eine Stütze zu bieten.

**2.** Gasgenerator nach dem vorangehenden Anspruch, wobei sich der nicht gestützte Teil der Einschlussmittel (40; 40') gegenüber einem Raum befindet, der von den Filtermitteln (30) leer gelassen wird.

**3.** Gasgenerator nach dem vorhergehenden Anspruch, wobei der nicht gestützte Teil ausgebildet ist, sich unter Bildung von Blättern (42) im von den Filtermitteln (30) leer gelassenen Raum aufzutrennen.

**4.** Gasgenerator nach einem der vorhergehenden Ansprüche, wobei sich mindestens eine Seite der Filtermittel (30) an einer Wand des Gehäuses (10) abstützt.

**5.** Gasgenerator nach dem vorangehenden Anspruch, wobei sich die am Gehäuse (10) abstützende Seite gegenüber einer Seite der Filtermittel (30), die eine Stütze für die Einschlussmittel (40; 40') bietet, befindet.

6. Gasgenerator nach einem der vorhergehenden Ansprüche, wobei die Diffusionslöcher (13) Steuerdüsen der Verbrennung des pyrotechnischen Materials (20) bilden.

7. Gasgenerator nach einem der vorhergehenden Ansprüche, wobei ein Raum (d) zwischen den Filtermitteln (30) und den Diffusionslöchern (13) angeordnet ist.

8. Gasgenerator nach dem vorangehenden Anspruch, wobei der Raum (d) zwischen einer stromabwärts gelegenen Seite der Filtermittel (30) und einer von den Diffusionslöchern (13) durchquerten Wand des Gehäuses (10) angeordnet ist und eine Dicke auf Höhe der Diffusionslöcher (13) von mindestens 1 mm aufweist.

9. Gasgenerator nach einem der vorangehenden Ansprüche, wobei die Einschlussmittel (40; 40') mit dem Gehäuse dicht verbunden sind.

10. Gasgenerator nach einem der vorhergehenden Ansprüche, wobei das Gehäuse (10) umfasst:

- eine Basis (11), die das pyrotechnische Material (20) aufnimmt, und
- einen Diffusor (12), umfassend die Diffusionslöcher (13), der auf die Basis (11) geschweißt ist,

wobei die Einschlussmittel (40; 40') auf das Gehäuse (10) geschweißt sind.

11. Gasgenerator nach dem vorangehenden Anspruch, wobei die Basis (11) auf den Diffusor (12) inertgeschweißt ist und wobei die Einschlussmittel (40; 40') Positioniermittel in Drehung in Bezug auf ein Element von Basis (11) und Diffusor (12) umfassen, so dass ein Inertschweißen an das andere Element von Basis (11) und Diffusor (12) gleichzeitig mit dem Inertschweißen der Basis (11) auf den Diffusor erfolgt.

12. Gasgenerator nach einem der Ansprüche 1 bis 8, wobei die Einschlussmittel (40; 40') eine Metallscheibe und einen O-Ring, ausgebildet zum Bilden einer Abdichtung zwischen der Metallscheibe und dem Gehäuse (10), umfassen.

13. Gasgenerator nach einem der vorhergehenden Ansprüche, umfassend eine Zündvorrichtung (70), wobei das pyrotechnische Material (20) gegenüber einer Seitenfläche der Zündfläche (70) und/oder gegenüber einem Ende der Zündvorrichtung (70) angeordnet ist.

14. Gasgenerator nach einem der vorhergehenden Ansprüche, wobei die Filtermittel (30) eine mittige Aussparung aufweisen und wobei das Gehäuse (10) und/oder die Einschlussmittel (40; 40') einen Zentriervorsprung im Eingriff mit der mittigen Aussparung aufweist (aufweisen).

15. Verfahren zum Montieren eines Gasgenerators nach einem der vorhergehenden Ansprüche, umfassend eine Zündvorrichtung (70), wobei das Gehäuse durch eine Basis (11) und einen die Diffusionslöcher (13) aufnehmenden Diffusor (12) gebildet ist, wobei das Verfahren zum Montieren die Schritte umfasst zum:

- Befestigen der Zündvorrichtung (70) an der Basis (11),
- Laden des pyrotechnischen Materials (20) in der Basis (11) in Kontakt mit der Zündvorrichtung (70) durch Schwerkraft über eine Ladeöffnung der Basis (11),
- Anordnen der Entleerungsmittel zwischen dem pyrotechnischen Material (20) und der Ladeöffnung der Basis (11),
- Anordnen der Einschlussmittel (40; 40') über den Entleerungsmitteln und auf der Höhe der Ladeöffnung,
- Anordnen der Filtermittel (30) auf den Einschlussmitteln (40; 40'),
- Schweißen des Diffusors (12) an die Ausgangskammer, so dass die Filtermittel (30) zwischen den Einschlussmitteln (40; 40') und einer Wand des Diffusors (12) angeordnet sind und die Ladeöffnung mit den Einschlussmitteln (40; 40') verschlossen ist.

Claims

1. Pyrotechnical gas generator with a discoid shape, comprising:

- a housing (10) with diffusion holes (13),
- pyrotechnical material (20) arranged in the housing (10),
- filtration means (30) arranged in the housing (10),
- containment means (40; 40'), arranged in the housing (10) between the pyrotechnical material (20) and the filtration means (30),
- drainage means arranged in the housing (10) between the pyrotechnical material (20) and the containment means (40; 40'), **characterized in that** the containment means (40; 40') are a seal, and **in that** the filtration means (30) are arranged to provide support for a supported portion of the containment means (40; 40') at the start of operation of the gas generator.

2. Gas generator according to the preceding claim, wherein the non-supported portion of the containment means (40; 40') is opposite a space left empty by the filtration means (30).

3. Gas generator according to the preceding claim, wherein the non-supported portion is arranged to rupture by forming petals (42) in the space left free by the filtration means (30).

4. Gas generator according to any one of the preceding claims, wherein at least one face of the filtration means (30) is supported on a wall of the housing (10).

5. Gas generator according to the preceding claim, wherein the face supported on the housing (10) is opposite to one face of the filtration means (30) providing support to the containment means (40; 40').

6. Gas generator according to any one of the preceding claims, wherein the diffusion holes (13) form nozzles for controlling the combustion of the pyrotechnical material (20).

7. Gas generator according to any one of the preceding claims, wherein a space (d) is provided between the filtration means (30) and the diffusion holes (13).

8. Gas generator according to the preceding claim, wherein the space (d) is provided between a downstream face of the filtration means (30) and a wall of the housing (10) through which the diffusion holes pass (13) and which has a thickness at the diffusion holes (13) of at least 1mm.

9. Gas generator according to any one of the preceding claims, wherein the containment means (40; 40') are connected to the housing in a sealing manner.

10. Gas generator according to any one of the preceding claims, wherein the housing (10) comprises:

   - a base (11) receiving the pyrotechnical material (20) and
   - a diffuser (12) comprising the diffusion holes (13), welded to the base (11),

   wherein the containment means (40; 40') are welded to the housing (10).

11. Gas generator according to the preceding claim, wherein the base (11) is inertia welded to the diffuser (12), and wherein the containment means (40; 40') comprise means for indexing in rotation relative to either the base (11) or the diffuser (12), so as to be inertia welded to the other of the base (11) or diffuser (12) simultaneously to the inertia welding of the base (11) to the diffuser.

12. Gas generator according to any one of claims 1 to 8, wherein the containment means (40; 40') comprise a metal disc and an O-ring arranged to form a seal between the metal disc and the housing (10).

13. Gas generator according to any one of the preceding claims, comprising an ignition device (70), and wherein pyrotechnical material (20) is arranged opposite a lateral surface of the ignition device (70), and/or opposite one end of the ignition device (70).

14. Gas generator according to any one of the preceding claims, wherein the filtration means (30) have a central recess, and wherein the housing (10) and/or the confinement means (40; 40') has/have a centering protuberance engaged with the central recess.

15. Method for assembling a gas generator according to any one of the preceding claims, which comprises an ignition device (70) and the housing of which is formed by a base (11) and a diffuser (12) receiving the diffusion holes (13), the assembly method comprising the steps consisting of:

    - securing the ignition device (70) to the base (11),
    - gravity-loading the pyrotechnical material (20) into the base (11) in contact with the ignition device (70), through a base loading opening (11),
    - positioning the drainage means between the pyrotechnical material (20) and the base loading opening (11),
    - positioning the containment means (40; 40') above the drainage means and in the region of the loading opening,
    - positioning the filtration means (30) on the containment means (40; 40')
    - welding the diffuser (12) to the chamber so that the filtration means (30) are interposed between the containment means (40; 40') and a wall of the diffuser (12) and so as to seal the loading opening with the containment means (40; 40').

Fig. 1

Fig. 2

Fig. 3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2195206 A2

- WO 2009043904 A2